# EUROPEAN PATENT APPLICATION

(11) **EP 2 783 941 A1**
(43) Date of publication of application: **01.10.2014**
(21) Application number: 14161440.4
(22) Date of filing: 25.03.2014
(51) Int. Cl.: B62D 1/184, B62D 1/187

(54) **Steering column apparatus**

(30) Priority: 27.03.2013 JP 2013065667
(71) Applicant: JTEKT CORPORATION, Osaka-shi Osaka 542-8502 (JP)
(72) Inventor: Sakata, Toru, Osaka-shi,, Osaka 542-8502 (JP)
(74) Representative: Winter, Brandl, Fürniss, Hübner, Röss, Kaiser, Polte - Partnerschaft mbB

(57) **Abstract**

In a steering column apparatus, a movable bracket (23) includes a body portion (31) fixed to an inner jacket (11) and elastically deformable extending portions (32, 33) that extend from the body portion (31). When a locking shaft (38) is moved toward an axial locking side (Z1), inclined driving surfaces (43, 44) of a pressing portion (37) of the locking shaft (38) elastically deform the extending portions (32, 33). Second restrained portions (72, 92) of the extending portions (32, 33) are pressed against second plate portions (28, 29) of an outer jacket (12), the second plate portions (28, 29) intersecting with a first plate portion (27) of the outer jacket (12). First restrained portions (71, 91) of the extending portions (32, 33) are pressed against the first plate portion (27).

## Description

### BACKGROUND OF THE INVENTION

### 1. Field of the Invention

The present invention relates to a steering column apparatus.

### 2. Description of the Related Art

A steering column apparatus has been proposed in which a lock bolt is inserted through a movable side member disposed on the side of a jacket for supporting a steering shaft, and a fixed side member, and the movable side member is drawn to one side by the lock bolt and fixed to the fixed side member. For example, refer to Japanese Patent Application Publication No. 2011-178231 (JP 2011-178231 A) and Japanese Patent Application Publication No. 2012-111364 (JP 2012-111364 A).

In technologies described in JP 2011-178231 A and JP 2012-111364 A, the structure, in which lock teeth engage with each other in order to eliminate backlashes at the time of locking, is employed. Therefore, the structure is complicated.

### SUMMARY OF THE INVENTION

An object of the present invention is to provide a steering column apparatus in which a backlash is suppressed and ridigity at a time of locking is improved, with a simple structure.

A steering column apparatus according to an aspect of the present invention includes a fixed bracket that includes a fixed plate and is fixed to a vehicle body member; a column jacket that includes an inner jacket and an outer jacket, the inner jacket supporting a steering shaft so that the steering shaft is rotatable, the outer jacket including a first plate portion that extends along the fixed plate and a second plate portion that extends from the first plate portion in a manner such that the second plate portion intersects with the first plate portion, and the outer jacket supporting the inner jacket so that the inner jacket is movable in an axial direction of the steering shaft; a movable bracket that includes a body portion fixed to the inner jacket and an elastically deformable extending portion that extends from the body portion, the extending portion including a first restrained portion that faces the first plate portion and a second restrained portion that faces the second plate portion; and a locking mechanism that includes a locking shaft, an operation lever, and a movement conversion mechanism, the locking shaft being inserted through the fixed plate and the first plate portion in a plate thickness direction of the fixed plate and the first plate portion, the locking shaft including a pressing portion at one end thereof in an axial direction of the locking shaft, which coincides with the plate thickness direction, the operation lever being rotated about a central axis of the locking shaft, the movement conversion mechanism converting rotation of the operation lever to movement of the locking shaft in the axial direction of the locking shaft, and the locking mechanism fixing the movable bracket to the fixed bracket when the first plate portion and the extending portion are held between the pressing portion and the fixed plate due to the movement of the locking shaft toward a locking side that is one side in the axial direction of the locking shaft. The pressing portion presses the first restrained portion against the first plate portion and presses the second restrained portion against the second plate portion by elastically deforming the extending portion at a time of locking.

In the steering column apparatus according to the above-mentioned aspect, the first restrained portion of the extending portion is pressed against the first plate portion in the plate thickness direction of the fixed plate and the first plate portion, and the second restrained portion of the extending portion is pressed against the second plate portion that intersects with the first plate portion due to the elastic deformation of the extending portion of the movable bracket, at the time of locking. That is, with the simple structure in which the extending portion that is elastically deformed is restrained in two directions that intersect with each other, it is possible to suppress multidirectional backlashes that may occur in the steering column apparatus. As a result, it is possible to improve the rigidity of the steering colum apparatus at the time of locking.

In the steering column apparatus according to the above-mentioned aspect, the extending portion may be supported by the body portion in a cantilever manner.

In the steering column apparatus according to the above-mentioned aspect, it is possible to ensure a sufficient elastic deformation amount of the extending portion, and to reliably suppress the backlashes.

In the steering column apparauts according to the above-mentioned aspect, the movable bracket may include a restricted portion provided in the body portion at a position in a vicinity of a base end portion of the extending portion; and when the restricted portion moves toward the locking side in the axial direction of the locking shaft, the restricted portion may come into contact with a restricting portion provided in the second plate portion so that displacement of the restricted portion toward the locking side in the axial direction of the locking shaft is restricted.

In the steering column apparauts according to the above-mentioned aspect, when the restricted portion of the movable bracket comes into contact with the restricting portion of the second plate portion so that the displacement of the restricted portion toward the locking side in the axial direction of the locking shaft is restricted, the displacment of the base end portion of the extending portion toward the locking side in the axial direction of the locking shaft is also restricted, the base end portion of the extending portion being located in the vicinity of the restricted portion, and the extending portion being supported in the cantilever manner. Thus, the elastic deformation of the extending portion at the time of locking can be promoted, and a backlash suppression effect can be enhanced.

In the steering column apparatus according to the above-mentioned aspect, a pair of second plate portions may be provided as the second plate portion, the second plate portions respectively may extend from a pair of ends of the first plate portion, and the first plate portion and the second plate portions may form a channel portion; a pair of extending portions may be provided as the extending portion, and each of the extending portions may include the first restrained portion that faces the first plate portion, and the second restrained portion that faces the corresponding second plate portion; a pair of inclined driving surfaces may be provided in the pressing portion, and the inclined driving surfaces may be inclined oppositely to each other so as to elastically deform the extending portions, respectively; and the second restrained portions of the extending portions may be respectively pressed against opposed surfaces of the second plate portions so that displacement of the second restrained portions in directions opposite to each other is restrained at the time of locking.

In the steering column apparauts according to the above-mentioned aspect, the inclined driving surfaces elastically deform the corresponding extending portions, respectively, and thus, the first restrained portions of the extending portions come into contact with the first plate portion so that the displacement of the first restrained portions toward the locking side in the axial direction of the locking shaft is restrained. Further, the second restrained portions of the extending portions come into contact with the opposed surfaces of the second plate portions so that the displacement of the second restrained portions in the directions is restrained, the directions intersecting with the axial direction of the locking shaft, and being opposite to each other. Thus, reaction forces received by the second restrained portions from the second plate portions can be balanced, and the backlash suppression effect can be further enhanced.

In the steering column apparatus according to the above-mentioned aspect, a pair of restricting portions may be provided as the restricting portion, and the restricting portions may be respectively formed in end faces of the second plate portions.

In the steering column apparatus according to the above-mentioned aspect, the channel portion and the movable bracket form a box shape. Therefore, it is possible to improve the rigidity at the time of locking.

In the steering column appartus according to the above-mentioned aspect, each of the restricting portions may function as a guide portion that guides movement of the movable bracket through the corresponding restricted portion at a time of unlocking; and a coefficient of friction between the first plate portion and the first restrained portions and a coefficient of friction between the second plate portions and the second restrained portions may be set to be larger than a coefficient of friction between the restricting portions and the corresponding restricted portions.

In the steering column apapratus according to the above-mentioned aspect, holding force can be increased by strong frictional engagement between the first plate portion and the corresponding first restrained portions, and between the second plate portions and the corresponding second restrained portions at the time of locking. Furthermore, when the movement of the movable bracket is guided by sliding the restricted portions relative to the corresponding restricting portions functioning as guide portions at the time of unlocking when the restrained portions are disengaged from the corresponding plate portions, improved sliding performance can be achieved by reducing the frictional resistance between the restricting portions and the corresponding restricted portions, and thus smooth guiding can be performed.

In the steering column apparaus according to the above-mentioned aspect, the axial direction of the locking shaft may be a horizontal direction, and the restricting portions may be disposed closer to a central axis of the inner jacket than the channel portion, with respect to the axial direction of the locking shaft.

In the steering column apparatus according to the above-mentioned aspect, at the time of unlocking, the load of the inner jacket can be mainly received at a plurality of locations that are the restricting portion and the second plate portion in the lower side, through the movable bracket. Furthermore, at the time of unlocking, a position at which the restricting portion in the lower side receives the load of the inner jacket is closer to the central axis of the inner jacket than the channel portion, with respect to the axial direction of the locking shaft. Therefore, the inner jacket can be supported at the position closer to the center of gravity. Therefore, it is possible to improve the sliding performance of the restricting portions and the corresponding restricted portions at the time of unlocking.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram showing a schematic configuration of a steering column apparatus acocrding to an embodiment of the present invention;
FIG. 2 is a schematic sectional view of the steering column apparatus, which is a sectional view taken along a line II-II in FIG. 1;
FIG. 3 is a schematic exploded perspective view of a main portion of the steering column apparatus;
FIG. 4 is an enlarged sectional view of the steering column apparatus, FIG. 4 showing an enlarged portion of FIG. 2;
FIG. 5A is a schematic sectional view of a main portion of the steering column apparatus, FIG. 5A showing an unlocked state, and emphatically showing gaps between portions as large gaps in order to facilitate understanding;
FIG. 5B is a schematic sectional view of the main portion of the steering column apparatus, FIG. 5B showing a state during transition from the unlocked state to a locked state;
FIG. 6A is a schematic sectional view of the main portion of the steering column apparatus, FIG. 6A showing a state during transition from the state in FIG. 5B to the locked state;
FIG. 6B is a schematic sectional view of the main portion of the steering column apparatus, FIG. 6B showing the locked state; and
FIG. 7 is a schematic sectional view of the main portion of the steering column apparatus in the unlocked state, FIG. 7 showing a state in which a locking shaft is slightly inclined with respect to a horizontal direction due to an effect of the weight thereof.

### DETAILED DESCRIPTION OF EMBODIMENTS

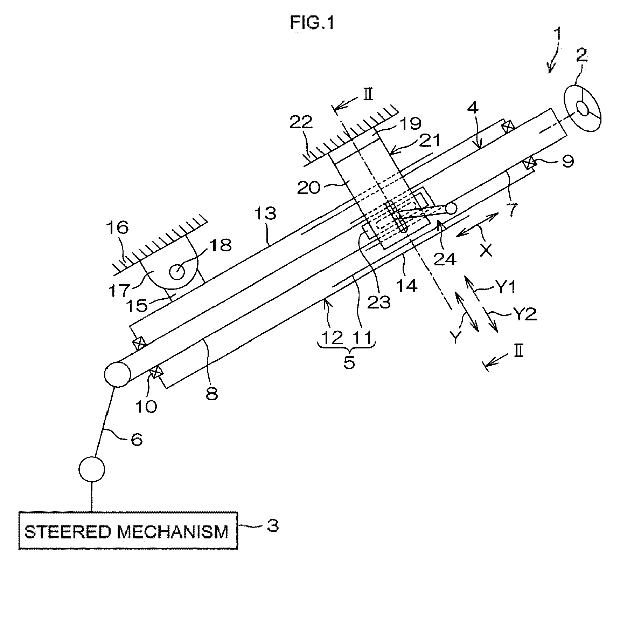

A description will hereinafter be made on embodiments of the present invention with reference to the accompanying drawings. Referring to FIG. 1, a steering column apparatus 1 mainly includes a steering member 2 such as a steering wheel, a steered mechanism 3, a steering shaft 4, and a substantially tubular column jacket 5. The steered mechanism 3 steers steered wheels (not shown) in accordance with a steering operation of the steering member 2. As the steered mechanism 3, a rack-and-pinion mechanism is used, for example.

The steering member 2 and the steered mechanism 3 are mechanically connected via the steering shaft 4, an intermediate shaft 6, and the like. The rotation of the steering member 2 is transmitted to the steered mechanism 3 via the steering shaft 4, the intermediate shaft 6, and the like. The rotation transmitted to the steered mechanism 3 is converted to axial movement of a rack shaft that is unillustrated in the drawings. Thus, the steered wheels are steered.

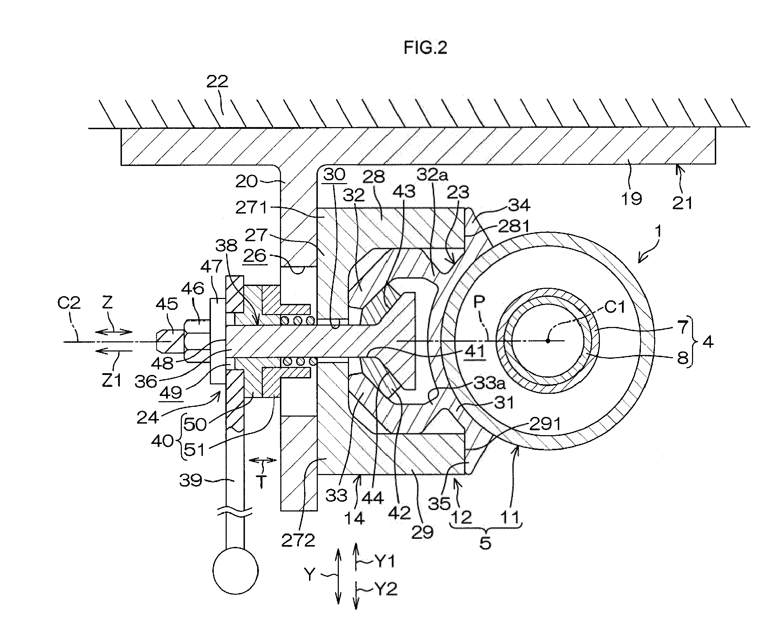

The steering shaft 4 includes an upper shaft 7 and a lower shaft 8 that are fitted together so that the upper shaft 7 and the lower shaft 8 are slidable relative to each other in an axial direction X. In this embodiment, the upper shaft 7 has a tubular shape, and a portion of the lower shaft 8 in the axial direction X is inserted into a lower portion of the upper shaft 7 in the axial direction X (also see FIG. 2 described later). The upper shaft 7 and the lower shaft 8 are spline-fitted or serration-fitted together, for example.

The steering member 2 is fitted to an upper end of the upper shaft 7 (corresponding to one end of the steering shaft 4) in the axial direction X. The steering shaft 4 can extend and contract along the axial direction X when the upper shaft 7 and the lower shaft 8 slide relative to each other. In the steering shaft 4, the upper shaft 7 actually moves. The steering shaft 4 is coaxially housed in the column jacket 5 and rotatably supported by the column jacket 5 through a plurality of bearings 9 and 10.

The column jacket 5 includes a tubular inner jacket 11 that is an upper jacket and an outer jacket 12 that is a lower jacket supporting the inner jacket 11 so that the inner jacket 11 is movable in the axial direction X. The outer jacket 12 includes a tubular portion 13 that is a lower portion in the axial direction X and a channel portion 14 that is an upper portion in the axial direction X. The tubular portion 13 surrounds at least a lower end portion of the inner jacket 11 in the axial direction X. The inner jacket 11 has the diameter smaller than the tubular portion 13 of the outer jacket 12 and protrudes from the tubular portion 13 of the outer jacket 12 to an upper side in the axial direction X.

The inner jacket 11 supports the upper shaft 7 so that the upper shaft 7 is rotatable, through the bearing 9 at one end of the inner jacket 11 (an upper end of the inner jacket 11 in the axial direction X). The inner jacket 11 is connected to the upper shaft 7 through the bearing 9 and is movable together with the upper shaft 7. The outer jacket 12 supports the lower shaft 8 so that the lower shaft 8 is rotatable, through the bearing 10 at one end of the outer jacket 12 (a lower end of the outer jacket 12 in the axial direction X). A lower column bracket 15 extending upward is fixed to the outer periphery of the lower portion of the inner jacket 11 in the axial direction X. The lower column bracket 15 is rotatably supported by a lower fixed bracket 17 fixed to a vehicle body member 16 via a tilt center shaft 18.

The column jacket 5 and the steering shaft 4 are rotated in a tilt direction Y about the tilt center shaft 18, and the position of the steering member 2 is adjusted about the tilt center shaft 18 (tilt adjustment). The position of the steering member 2 is adjusted in the axial direction X (corresponding to a telescopic direction) by adjusting the extension and contraction amount of the column jacket 5 and the steering shaft 4 (telescopic adjustment).

An upper fixed bracket 21 includes a first fixed plate 19 and a second fixed plate 20 extending from the first fixed plate 19. The upper fixed bracket 21 is fixed to a vehicle body member 22. A movable bracket 23 is fixed to the inner jacket 11. The steering column apparatus 1 includes a locking mechanism 24 that fastens the movable bracket 23 together with the channel portion 14 of the outer jacket 12 to the second fixed plate 20 of the upper fixed bracket 21 and thus achieves a tilt lock and a telescopic lock.

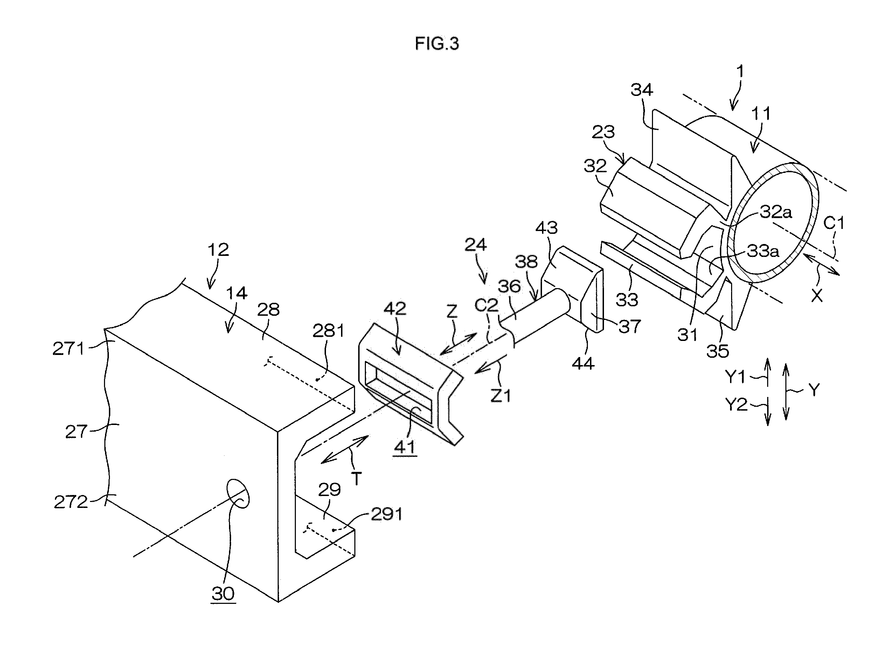

FIG. 2 is a sectional view taken along the line II-II in FIG. 1. FIG. 3 is a schematic exploded perspective view of a main portion of the steering column apparatus 1. As shown in FIG. 2, the upper fixed bracket 21 includes the first fixed plate 19 and the second fixed plate 20. The first fixed plate 19 is fixed to the vehicle body member 22 with a fixing member such as a bolt, which is unillustrated in the drawing. The second fixed plate 20 extends from the first fixed plate 19. The first fixed plate 19 is a top plate, for example, and the second fixed plate 20 is a long plate extending in the tilt direction Y, for example. The second fixed plate 20 has a long locking shaft insertion hole 26 for tilt movement that extends in the tilt direction Y.

Referring to FIG. 2 and FIG. 3, the channel portion 14 of the outer jacket 12 of the column jacket 5 includes a first plate portion 27 and a pair of second plate portions 28 and 29. The first plate portion 27 extends along the second fixed plate 20 of the upper fixed bracket 21. The second plate portions 28 and 29 respectively extend from a pair of ends 271 and 272 of the first plate portion 27 in an up-down direction (tilt direction Y) in a manner such that the second plate portions 28 and 29 intersect with the first plate portion 27 (the second plate portions 28 and 29 are orthogonal to the first plate portion 27). The plate thickness direction T of the second fixed plate 20 is the same as the plate thickness direction T of the first plate portion 27. The first plate portion 27 has a circular locking shaft insertion hole 30. End faces of the second plate portions 28 and 29 respectively function as restricting portions 281 and 291.

The movable bracket 23 includes a body portion 31, a pair of extending portions 32 and 33, and restricted portions 34 and 35. The body portion 31 is fixed to the outer periphery of the inner jacket 11 and has an arc-shaped section. The extending portions 32 and 33 extend from the body portion 31 to outer sides in a substantially radial direction, and the extending portions 32 and 33 are elastically deformable. The restricted portions 34 and 35 are provided in the body portion 31 at positions in the vicinity of the base end portions 32a and 33a of the extending portions 32 and 33, respectively. Each of the restricted portions 34 and 35 has an outwardly protruding shape. Specifically, as shown in FIG. 3, the restricted portions 34 and 35 extend in the axial direction X. The sectional shape of each of the restricted portions 34 and 35 orthogonal to the axial direction X is a triangle, for example.

During the transition from an unlocked state to a locked state, the restricted portions 34 and 35 respectively come into contact with the corresponding restricting portions 281 and 291, and thus the movement of the restricted portions 34 and 35 toward the second fixed plate 20 is restricted. The locking mechanism 24 includes a locking shaft 38 and a movement conversion mechanism 40. The locking shaft 38 includes a shaft body 36 and a pressing portion 37. The shaft body 36 is inserted through the locking shaft insertion hole 26 and the locking shaft insertion hole 30. The pressing portion 37 is disposed at one end of the shaft body 36 in an axial direction Z and presses the first plate portion 27 to the second fixed plate 20 through the movable bracket 23. The movement conversion mechanism 40 converts the rotation of an operation lever 39 to the movement of the locking shaft 38 in the axial direction Z. The axial direction Z of the locking shaft 38 extends along the plate thickness direction T of the second fixed plate 20 and the first plate portion 27.

The locking mechanism 24 includes a slide plate 42 and a pair of inclined driving surfaces 43 and 44 as driving portions. The slide plate 42 has a long locking shaft insertion hole 41 for telescopic movement through which the locking shaft 38 is inserted and which extends in a direction parallel to the axial direction X of the steering shaft 4. The slide plate 42 is fitted to the extending portions 32 and 33. The inclined driving surfaces 43 and 44 are provided in the pressing portion 37 of the locking shaft 38. The inclined driving surfaces 43 and 44 elastically deform the extending portions 32 and 33 of the movable bracket 23, respectively, through the slide plate 42 when the inclined driving surfaces 43 and 44 move toward an axial locking side Z1 in the axial direction of the locking shaft 38.

For example, a width-across-flat portion is formed at a portion of the shaft body 36 of the locking shaft 38, the portion of the shaft 36 being inserted through the locking shaft insertion hole 41 of the slide plate 42. This restricts the rotation of the locking shaft 38. A threaded portion 45 is provided at the other end of the shaft body 36 of the locking shaft 38 in the axial direction Z. A nut 46 is screwed to the threaded portion 45. The nut 46 presses an annular thrust plate 47 that is fitted to the threaded portion 45, against a stepped portion 48 at one end of the threaded portion 45 so that the annular thrust plate 47 is fixed.

A locking shaft insertion hole 49 is formed at a base end of the operation lever 39. The shaft body 36 of the locking shaft 38 is inserted through the locking shaft insertion hole 49. The bore diameter of the locking shaft insertion hole 49 is formed to be larger than the outside diameter of the shaft body 36. The movement conversion mechanism 40 includes a cam 50 and a cam follower 51. The cam 50 is fitted to the outer periphery of the shaft body 36 of the locking shaft 38 so that the cam 50 is rotatable, and the cam 50 is also fitted to the operation lever 39 so that the cam 50 is rotatable together with the operation lever 39. The rotation of the cam follower 51 is restricted by the locking shaft insertion hole 26 of the second fixed plate 20. The cam follower 51 is movable in the axial direction Z with respect to the locking shaft 38 and engages with the cam 50.

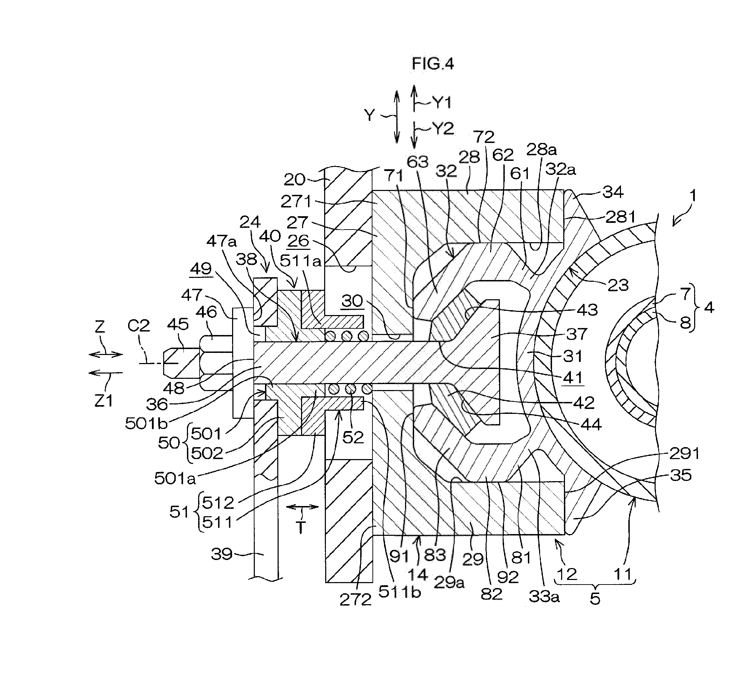

Referring to FIG. 4 that is an enlarged sectional view of a portion of FIG. 2, the cam 50 includes a tubular first portion 501 and an annular plate-shaped second portion 502. The first portion 501 is rotatably fitted to the outer periphery of the shaft body 36. The second portion 502 extends from an intermediate portion of the first portion 501 in the axial direction, to the outer side in the radial direction. The cam follower 51 includes a first portion 511 and a second portion 512. The first portion 511 has a portion 511a that is fitted to the outer periphery of one end 501a of the first portion 501 of the cam 50 so that the portion 511a is rotatable relative to the first portion 501, and a portion 511b that is inserted into the locking shaft insertion hole 26 of the second fixed plate 20. The second portion 512 extends from one end of the first portion 511 in the axial direction, to the outer side in the radial direction, and faces the second portion 502 of the cam 50 in the axial direction Z.

The other end 501b of the first portion 501 of the cam 50 is fitted in the locking shaft insertion hole 49 of the operation lever 39 so that the other end 501b is rotatable together with the operation lever 39. Specifically, the section of the other end 501b of the first portion 501 and the locking shaft insertion hole 49 has a shape in which the width-across-flat portion is formed, for example. This allows the operation lever 39 and the cam 50 to rotate together. On the other hand, the one end 501a of the first portion 501 of the cam 50 is fitted to the inner periphery of the portion 511 a of the first portion 511 of the cam follower 51 so that the one end 501a is rotatable relative to the portion 511a. Cam protrusions (not shown), which engage with each other due to the relative rotation of the cam 50 and the cam follower 51, are provided on an opposed surface of the second portion 502 of the cam 50 and an opposed surface of the second portion 512 of the cam follower 51, the opposed surfaces facing each other.

In the second portion 512 of the cam follower 51, a surface on a side opposite to the opposed surface extends along the second fixed plate 20 of the upper fixed bracket 21. That is, the second portion 502 of the cam 50 and the second portion 512 of the cam follower 51 are held between the thrust plate 47 fixed to the locking shaft 38 and the second fixed plate 20. When the operation lever 39 is rotated, the cam 50 rotates due to the rotation of the operation lever 39, and thus, the rotational position of the cam 50 with respect to the cam follower 51 is changed. Accordingly, the locking shaft 38 moves in the axial direction Z, the distance between the second fixed plate 20 and the nut 46 is changed, and the pressing portion 37 moves toward or away from the second fixed plate 20.

At least an opposed surface of the thrust plate 47, which faces the operation lever 39, is constituted by a low friction member (for example, fluorine resin). Thus, when the operation lever 39 is rotated, the frictional resistance between the operation lever 39 and the thrust plate 47 is reduced, and the operation lever 39 can be smoothly rotated. Alternatively, a thrust bearing may be used in place of the thrust plate 47.

An urging member 52, which surrounds the shaft body 36 of the locking shaft 38 and is formed of, for example, a compression coil spring, is housed in the first portion 511 of the cam follower 51. The urging member 52 is elastically compressed between the one end 501a of the first portion 501 of the cam 50 and the first plate portion 27 of the channel portion 14 in the axial direction Z. The urging force of the urging member 52 urges the locking shaft 38 toward the axial locking side Z1 through the cam 50, the operation lever 39, the thrust plate 47, and the nut 46. Specifically, the urging force is applied in a direction in which the pressing portion 37 of the locking shaft 38 approaches the second fixed plate 20 (locking side). That is, the urging force of the urging member 52 is applied in the direction in which the restricted portions 34 and 35 approach the corresponding restricting portions 281 and 291 at the time of unlocking so that the restricted portions 34 and 35 and the corresponding restricting portions 281 and 291 are prevented from being excessively away from each other. Thus, the inner jacket 11 and the movable bracket 23 are prevented from being displaced downward.

If the inner jacket 11 and the movable bracket 23 are displaced downward due to the weight thereof at the time of unlocking, the restricting portion 281 and the corresponding restricted portion 34 in an upper side Y1 in the tilt direction Y do not come into contact with each other, and thus there is a possibility that only the sliding portion between the restricting portion 291 and the restricted portion 35 in a lower side Y2 in the tilt direction Y may be worn away (unevenly worn) at an early stage of the telescopic adjustment. In contrast, the uneven wear is prevented in this embodiment by bringing the upper and lower restricted portions 34 and 35 into loose contact with the corresponding restricting portions 281 and 291 by using the urging force of the urging member 52 at the time of unlocking.

The extending portion 32 includes a first segment 61 continuous with the body portion 31, a second segment 62, and a third segment 63 that are sequentially connected to each other in a manner such that the extending portion 32 is bent. The entire extending portion 32 has a chevron shape. The first segment 61 and the third segment 63 are inclined oppositely to each other and form a pair of slopes of the chevron shape. The top of the chevron shape, which is provided in the second segment 62, constitutes a second restrained portion 72 that is pressed against the second plate portion 28 at the time of locking. A first restrained portion 71 that is pressed against the first plate portion 27 at the time of locking is provided at a tip of the third segment 63.

The extending portion 32 and the extending portion 33 have the chevron shapes that protrude in directions opposite to each other and are symmetric to each other. Specifically, the extending portion 32 and the extending portion 33 are symmetric with respect to a plane P (see FIG. 2) that includes a central axis C1 of the inner jacket 11 and a central axis C2 of the locking shaft 38. That is, as shown in FIG. 4, the extending portion 33 includes a first segment 81 continuous with the body portion 31, a second segment 82, and a third segment 83 that are sequentially connected to each other in a manner such that the extending portion 33 is bent. The entire extending portion 33 has the chevron shape. The first segment 81 and the third segment 83 are inclined oppositely to each other and form a pair of slopes of the chevron shape. The top of the chevron shape, which is provided in the second segment 82, constitutes a second restrained portion 92 that is pressed against the second plate portion 29 at the time of locking. A first restrained portion 91 that is pressed against the first plate portion 27 at the time of locking is provided at a tip of the third segment 83.

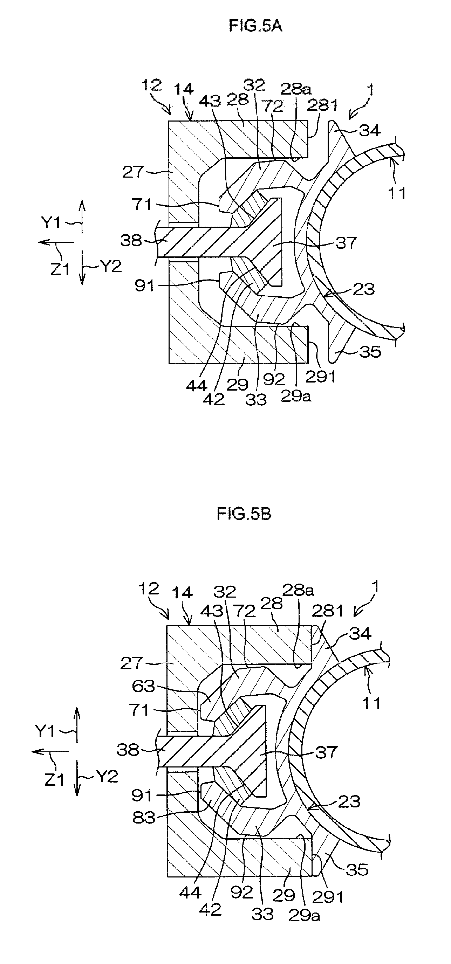

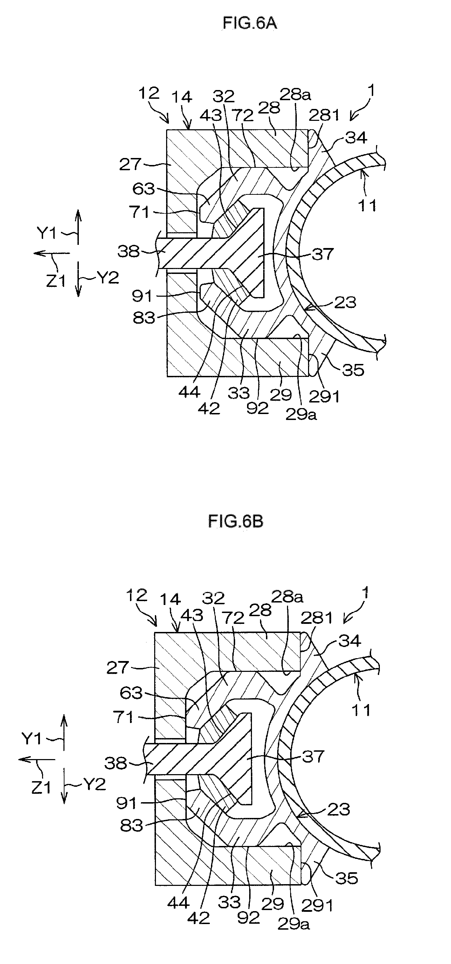

A description will be made on a locking operation with reference to FIG. 5A, FIG. 5B, FIG. 6A, and FIG. 6B. FIG. 5A shows an unlocked state. In the unlocked state shown in FIG. 5A, the first restrained portions 71 and 91 of the extending portions 32 and 33 are not pressed against the first plate portion 27. The first restrained portions 71 and 91 are in light contact with the first plate portion 27, or a small gap is formed between the first restrained portions 71 and 91 and the first plate portion 27. In the unlocked state, the second restrained portion 72 and 92 of the extending portions 32 and 33 are not pressed against the corresponding second plate portions 28 and 29. That is, the second restrained portions 72 and 92 are in light contact with the corresponding second plate portions 28 and 29, or small gaps are formed between the second restrained portions 72 and 92 and the corresponding second plate portions 28 and 29.

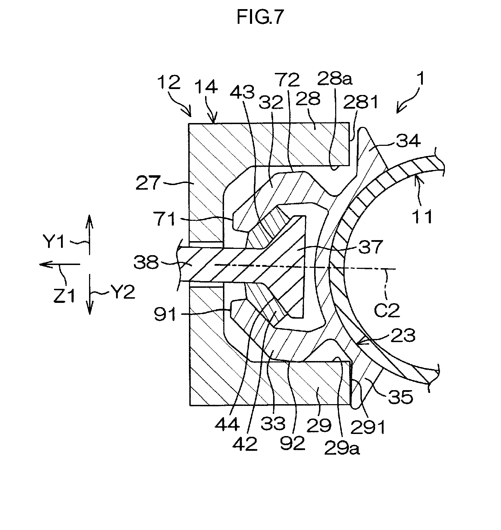

In FIG. 5A, to facilitate understanding, gaps between the restricting portions 281 and 291 and the corresponding restricted portions 34 and 35 are emphatically shown as large gaps. However, in actuality, the restricted portions 34 and 35 are positioned close to the corresponding restricting portions 281 and 291 by the function of the urging member 52 so as to substantially come into contact with each other. That is, even at the time of unlocking, the components are in the state shown in FIG. 5B or in a similar state (a state shown in an explanatory diagram of FIG. 7 described later).

During the telescopic adjustment, the restricting portions 281 and 291 and the corresponding restricted portions 34 and 35 slide relative to each other, while the first restrained portions 71 and 91 and the first plate portion 27 do not slide relative to each other, and the second restrained portions 72 and 92 and the corresponding second plate portions 28 and 29 hardly slide relative to each other. However, the second restrained portion 92 and the second plate portion 29 in the lower side Y2 in the tilt direction Y may slightly slide relative to each other.

The coefficient of friction between the restricting portions 281 and 291 and the corresponding restricted portions 34 and 35, which slide relative to each other in the unlocked state, is set to be smaller than the coefficient of friction between the first restrained portions 71 and 91 and the first plate portion 27 that are pressed against each other at the time of locking and the coefficient of friction between the second restrained portions 72 and 92 and the corresponding second plate portions 28 and 29 that are pressed against each other at the time of locking. When the operation lever 39 is rotated and the pressing portion 37 moves toward the axial locking side Z1 in the axial direction of the locking shaft 38 and approaches the first plate portion 27 by a specified amount as shown in FIG. 5B, the restricted portions 34 and 35 come into contact with the corresponding restricting portions 281 and 291, respectively. Thus, the displacement of the restricted portions 34 and 35 toward the axial locking side Z1 is restricted.

When the operation lever 39 is further rotated from the state shown in FIG. 5B and the pressing portion 37 further moves toward the axial locking side Z1 and further approaches the first plate portion 27 as shown in FIG. 6A, the inclined driving surfaces 43 and 44 of the pressing portion 37 drive the corresponding third segments 63 and 83 of the extending portions 32 and 33 through the slide plate 42, and elastically deform the corresponding extending portions 32 and 33. Thus, the second restrained portions 72 and 92 are respectively pressed against the corresponding second plate portions 28 and 29.

When the operation lever 39 is further rotated from the state shown in FIG. 6A and the pressing portion 37 further moves toward the axial locking side Z1 and further approaches the first plate portion 27 as shown in FIG. 6B, the inclined driving surfaces 43 and 44 of the pressing portion 37 further drive the corresponding third segments 63 and 83 of the extending portions 32 and 33 through the slide plate 42 and further deform the corresponding extending portions 32 and 33 elastically. Thus, the first restrained portions 71 and 91 are pressed against the first plate portion 27 and the locked state is achieved.

According to this embodiment, due to the elastic deformation of the extending portions 32 and 33 of the movable bracket 23 at the time of locking, the first restrained portions 71 and 91 of the extending portions 32 and 33 are pressed against the first plate portion 27 in the plate thickness direction T of the second fixed plate 20 and the first plate portion 27, and the second restrained portion 72 and 92 of the extending portions 32 and 33 are pressed against the second plate portions 28 and 29 that intersect with the first plate portion 27. That is, the extending portions 32 and 33 that are elastically deformed can be restrained in two directions intersecting with each other, and thus multidirectional backlashes that may occur in the steering column apparatus 1 can be suppressed. With a simple structure in which the extending portions 32 and 33 that are elastically deformed are restrained in the two directions intersecting with each other, the rigidity of the steering column apparatus 1 can be improved.

No spring element is involved in a locking force transmission passage at the time of locking, and thus the axial force of the locking shaft 38 can be used without being changed, as the locking force. The extending portions 32 and 33 of the movable bracket 23 function as strong gap reducing members (backlash eliminating members) that reduce the gaps between the movable bracket 23 and the outer jacket 12 (eliminate the backlashes). Thus it is possible to improve the rigidity of the steering column apparatus 1. The locking force can be adjusted by adjusting only the fastening torque of the locking shaft 38 (by adjusting only one portion).

The extending portions 32 and 33, which elastically deform for reducing the gaps, adjust their elastic deformation amounts autonomously to reduce the gaps. Thus, the extending portions 32 and 33 can absorb variations in dimensional accuracy of the outer jacket 12 that is a counterpart component. Therefore, the shape of the counterpart component can be simplified, the required accuracy of the surface (for example, the required flatness) of the counterpart component can be lowered, and the production cost can be reduced.

The extending portions 32 and 33 are supported by the body portion 31 in a cantilever manner, and thus the sufficient elastic deformation amounts of the extending portions 32 and 33 can be ensured, and the suppression of the backlashes can be ensured. When the restricted portions 34 and 35 of the movable bracket 23 come into contact with the corresponding restricting portions 281 and 291 of the outer jacket 12 and the displacement of the restricted portions 34 and 35 toward the axial locking side Z1 in the axial direction of the locking shaft 38 is restricted during the transition from the unlocked state to the locked state, the displacement of the base end portions 32a and 33a of the extending portions 32 and 33 toward the axial locking side Z1 is also restricted, the base end portions 32a and 33a being located in the vicinity of the restricted portions 34 and 35, and the extending portions 32 and 33 being supported in the cantilever manner. Thus, the elastic deformation of the extending portions 32 and 33 at the time of locking can be promoted, and a backlash suppression effect can be enhanced.

The pair of second plate portions, the pair of extending portions, and the pair of inclined driving surfaces (driving portions) are provided. That is, the inclined driving surfaces 43 and 44 elastically deform the corresponding extending portions 32 and 33, respectively, and thus the first restrained portions 71 and 91 of the extending portions 32 and 33 come into contact with the first plate portion 27 to restrain the displacement of the locking shaft 38 toward the axial locking side Z1. The second restrained portions 72 and 92 of the extending portions 32 and 33 respectively come into contact with the opposed surfaces 28a and 29a of the second plate portions 28 and 29 to restrain the displacement of the locking shaft 38 in the directions that are opposite to each other, and intersect with the axial direction Z (the directions corresponding to the directions toward the upper side Y1 in the tilt direction Y and toward the lower side Y2 in the tilt direction Y as shown in FIG. 4). Thus, reaction forces received by the second restrained portions 72 and 92 from the second plate portions 28 and 29 are balanced, and the backlash suppression effect can be further enhanced.

The restricting portions 281 and 291 are formed in the end faces of the second plate portions 28 and 29 of the channel portion 14. Therefore, the channel portion 14 and the movable bracket 23 form a box shape (that is, form a closed section), and thus the rigidity of the steering column apparatus 1 at the time of locking can be further improved. The coefficient of friction between the restricting portions 281 and 291 and the corresponding restricted portions 34 and 35, which slide relative to each other in the unlocked state, is set to be smaller than the coefficient of friction between the first restrained portions 71 and 91 and the first plate portion 27 that are pressed against each other at the time of locking and the coefficient of friction between the second restrained portion 72 and 92 and the corresponding second plate portions 28 and 29 that are pressed against each other at the time of locking. Therefore, the following advantages can be obtained.

Holding force can be increased by strong frictional engagement between the first plate portion 27 and the corresponding first restrained portions 71 and 91, and between the second plate portions 28 and 29 and the corresponding second restrained portions 72 and 92 at the time of locking. Furthermore, when the movement of the movable bracket 23 is guided by sliding the restricted portions 34 and 35 relative to the corresponding restricting portions 281 and 291 functioning as guide portions at the time of unlocking when the first restrained portions 71 and 91 are disengaged from the corresponding first plate portion 27, and the second restrained portions 72 and 92 are disengaged from the corresponding second plate portions 28 and 29, improved sliding performance can be achieved by reducing the frictional resistance between the restricting portions 281 and 291 and the corresponding restricted portions 34 and 35, and thus smooth guiding can be performed. That is, it is possible to achieve the strong locking at the time of locking and to achieve the good sliding performance at the time of unlocking.

At the time of unlocking, the load of the inner jacket 11 can be received at a plurality of locations that are the restricting portion 291 and the second plate portion 29 in the lower side Y2 in the tilt direction Y through the restricted portion 35 and the second restrained portion 92 of the movable bracket 23 in the lower side Y2 in the tilt direction Y, as shown in FIG. 7 for example. Furthermore, at the time of unlocking, a position at which the restricted portion 35 in the lower side Y2 in the tilt direction Y receives the load of the inner jacket 11 is closer to the central axis C1 of the inner jacket 11 than the channel portion 14, with respect to the axial direction Z of the locking shaft 38. Therefore, the inner jacket 11 can be supported at the position closer to the center of gravity. Therefore, it is possible to improve the sliding performance of the restricting portion 291 and the restricted portion 35 and the sliding performance of the second plate portion 29 and the second restrained portion 92 at the time of unlocking.

The present invention is not limited to the foregoing embodiment. For example, in the embodiment, as shown in FIG. 6A and FIG. 6B, the first restrained portions 71 and 91 are restrained after the second restrained portion 72 and 92 are restrained during the transition to the locked state, but the present invention is not limited to this. For example, the second restrained portion 72 and 92 may be restrained after the first restrained portions 71 and 91 are restrained. The first restrained portions 71 and 91 and the second restrained portion 72 and 92 may be restrained concurrently.

Although not shown, a sliding friction reduction element may be provided to reduce the sliding friction between sliding surfaces of the second plate portion 29 and the second restrained portion 92 that are slide relative to each other in the telescopic adjustment at the time of unlocking. At least one of the sliding surfaces of the second plate portion 29 and the second restrained portion 92 may be coated with a low friction member such as fluorine resin, as the sliding friction reduction element. As the sliding friction reduction element, a low friction plate made of, for example, fluorine resin may be fixed to at least one of the sliding surfaces of the second plate portion 29 and the second restrained portion 92. A rolling bearing such as a needle roller bearing may be interposed between the opposed surfaces of the second plate portion 29 and the second restrained portion 92.

Furthermore, the sliding friction reduction element or the rolling bearing may be provided to reduce the sliding friction between the sliding surfaces of the restricting portion 291 and the restricted portion 35 that slide relative to each other in the telescopic adjustment at the time of locking.

## Claims

1. A steering column apparatus comprising:
a fixed bracket that includes a fixed plate and is fixed to a vehicle body member;
a column jacket that includes an inner jacket and an outer jacket, the inner jacket supporting a steering shaft so that the steering shaft is rotatable, the outer jacket including a first plate portion that extends along the fixed plate and a second plate portion that extends from the first plate portion in a manner such that the second plate portion intersects with the first plate portion, and the outer jacket supporting the inner jacket so that the inner jacket is movable in an axial direction of the steering shaft;
a movable bracket that includes a body portion fixed to the inner jacket and an elastically deformable extending portion that extends from the body portion, the extending portion including a first restrained portion that faces the first plate portion and a second restrained portion that faces the second plate portion; and
a locking mechanism that includes a locking shaft, an operation lever, and a movement conversion mechanism, the locking shaft being inserted through the fixed plate and the first plate portion in a plate thickness direction of the fixed plate and the first plate portion, the locking shaft including a pressing portion at one end thereof in an axial direction of the locking shaft, which coincides with the plate thickness direction, the operation lever being rotated about a central axis of the locking shaft, the movement conversion mechanism converting rotation of the operation lever to movement of the locking shaft in the axial direction of the locking shaft, and the locking mechanism fixing the movable bracket to the fixed bracket when the first plate portion and the extending portion are held between the pressing portion and the fixed plate due to the movement of the locking shaft toward a locking side that is one side in the axial direction of the locking shaft,
wherein the pressing portion presses the first restrained portion against the first plate portion and presses the second restrained portion against the second plate portion by elastically deforming the extending portion at a time of locking.

2. The steering column apparatus according to claim 1, wherein the extending portion is supported by the body portion in a cantilever manner.

3. The steering column apparatus according to claim 2, wherein:
the movable bracket includes a restricted portion provided in the body portion at a position in a vicinity of a base end portion of the extending portion; and
when the restricted portion moves toward the locking side in the axial direction of the locking shaft, the restricted portion comes into contact with a restricting portion provided in the second plate portion so that displacement of the restricted portion toward the locking side in the axial direction of the locking shaft is restricted.

4. The steering column apparatus according to claim 3, wherein:
a pair of second plate portions is provided as the second plate portion, the second plate portions respectively extend from a pair of ends of the first plate portion, and the first plate portion and the second plate portions form a channel portion;
a pair of extending portions is provided as the extending portion, and each of the extending portions includes the first restrained portion that faces the first plate portion, and the second restrained portion that faces the corresponding second plate portion;
a pair of inclined driving surfaces is provided in the pressing portion, and the inclined driving surfaces are inclined oppositely to each other so as to elastically deform the extending portions, respectively; and
the second restrained portions of the extending portions are respectively pressed against opposed surfaces of the second plate portions so that displacement of the second restrained portions in directions opposite to each other is restrained at the time of locking.

5. The steering column apparatus according to claim 4, wherein a pair of restricting portions is provided as the restricting portion, and the restricting portions are respectively formed in end faces of the second plate portions.

6. The steering column apparatus according to claim 5, wherein:
each of the restricting portions functions as a guide portion that guides movement of the movable bracket through the corresponding restricted portion at a time of unlocking; and
a coefficient of friction between the first plate portion and the first restrained portions and a coefficient of friction between the second plate portions and the second restrained portions are set to be larger than a coefficient of friction between the restricting portions and the corresponding restricted portions.

7. The steering column apparatus according to claim 5 or 6, wherein:
the axial direction of the locking shaft is a horizontal direction, and
the restricting portions are disposed closer to a central axis of the inner jacket than the channel portion, with respect to the axial direction of the locking shaft.
